# EUROPÄISCHE PATENTSCHRIFT

(11) **EP 0 972 699 B1**
(45) Veröffentlichungstag und Bekanntmachung des Hinweises auf die Patenterteilung: **08.12.2004**
(21) Anmeldenummer: 99111007.3
(22) Anmeldetag: 10.06.1999
(51) Int. Cl.: B62D 33/067

(54) **Vordere Lagerung des kippbaren Fahrerhauses eines Lastkraftwagens**
Front bearing for tilt cab truck
Palier avant pour la cabine basculante d'un camion

(30) Priorität: 13.07.1998 DE 19831328
(43) Veröffentlichungstag der Anmeldung: 19.01.2000
(73) Patentinhaber: MAN Nutzfahrzeuge Aktiengesellschaft, 80976 München (DE)
(72) Erfinder: Kienast, Frank, Dipl.-Ing., 85726 Pfaffenhofen/Ilm (DE); Wunderlich, Walter, Dipl.-Ing., 4441 Behamberg (AT); Wührleitner, Gerhard, Dipl.-Ing., 4400 Steyr (AT)

(56) Entgegenhaltungen:
- EP-A- 0 798 198
- DE-A- 19 637 920

## Beschreibung

Die Erfindung betrifft eine vordere Lagerung des kippbaren Fahrerhauses eines Lastkraftwagens mit Merkmalen, wie im Oberbegriff des Anspruchs 1 und EP 0 798 798 A1 angegeben.

Die Erfindung geht aus von einer aus der EP 0 798198 A1 (≤ DE 196 12 502 A1) bekannten Fahrerhaus-Lagerung. Dort ist das kippbare Fahrerhaus vorne mittels zweier Feder-Dämpfer-Beine gegenüber dem Fahrgestell-Rahmen abgefedert, von denen jedes unten an einem rahmenfesten Lagerbock und oben an einem Endbereich einer Querstabilisatorstange angelenkt ist. Letztere bildet hier das vordere Lagerorgan für das Fahrerhaus und gleichzeitig auch die Schwenkachse für dessen Kippen, wobei das Fahrerhaus über das vordere Ende zweier an ihm befestigten Konsolen schwenkbar an der Querstabilisatorstange angelenkt ist. Die Lage des Fahrerhauses und der Feder-Dämpfer-Beine ist gegenüber dem Fahrgestell-Rahmen über die Querstabilisatorstange durch zwei Längslenker stabilisiert, von denen jeder mit seinem vorderen Ende die Querstabilisatorstange axial gesichert aufnimmt und mit seinem hinteren Ende über ein integriertes Lager quer- und längsgeführt sowie schwenkbar in einem rahmenfesten Lagerbock aufgenommen ist. Die Längslenker bilden mit der Querstabilisatorstange eine U-förmige Stabilisatorschwinge.

Bei einer anderen Fahrerhaus-Lagerung gemäß der DE 44 13 414 A1 ist das kippbare Fahrerhaus vorne ebenfalls mittels zweier Feder-Dämpfer-Beine gegenüber dem Fahrgestell-Rahmen abgefedert, von denen jedes unten an einem rahmenfesten Lagerbock und oben an einem einstückigen, U-förmigen Stabilisatorlenker angelenkt ist. Dieser Stabilisatorlenker besteht aus einem linken und rechten Federblattlenker, die vorne durch eine Querstrebe miteinander verbunden sind und von denen jeder hinten fest an einem Fahrgestell-Rahmen befestigt ist. Das Fahrerhaus selbst ist über zwei Konsolen am U-förmigen Stabilisatorlenker angelenkt, und zwar jeweils in einem Lagerbock, der oben am Stabilisatorlenker am Übergangsbereich zwischen einem Federblattlenker und der Querstrebe befestigt ist. Ersichtlicherweise ist diese Fahrerhaus-Lagerung in Fahrzeuglängsrichtung gesehen relativ unnachgiebig, was den Ansprüchen moderner Fahrerhaus-Lagerungen nicht mehr gerecht wird.

Zum technologischen Hintergrund zählen auch Fahrerhaus-Lagerungen wie aus der DE 196 37 920 A1. DE 3402070 A1. EP 0 768 231 A1 und AT 311811 B bekannt.

Es ist demgegenüber Aufgabe der Erfindung, eine vordere Lagerung für das kippbare Fahrerhaus eines Lastkraftwagens zu schaffen, die im Frontalcrashfall mit einem Hindernis oder einem anderen Fahrzeug einen energieverzehrenden Längsversatz des Fahrerhauses gegenüber dem Fahrgestell-Rahmen ermöglicht und im übrigen kostengünstig herstellbar und montierbar ist.

Diese Aufgabe ist erfindungsgemäß durch die im Anspruch 1 beanspruchte vordere Fahrerhaus-Lagerung gelöst.

Vorteilhafte Ausgestaltungen und Weiterbildungen dieser Lösung sind in den Unteransprüchen gekennzeichnet.

Die Vorteile der erfindungsgemäßen Lösung sind weiter hinten in Verbindung mit der nachfolgenden Beschreibung zweier Ausführungsbeispiele der Erfindung anhand der Zeichnung erläutert. In der Zeichnung zeigen:

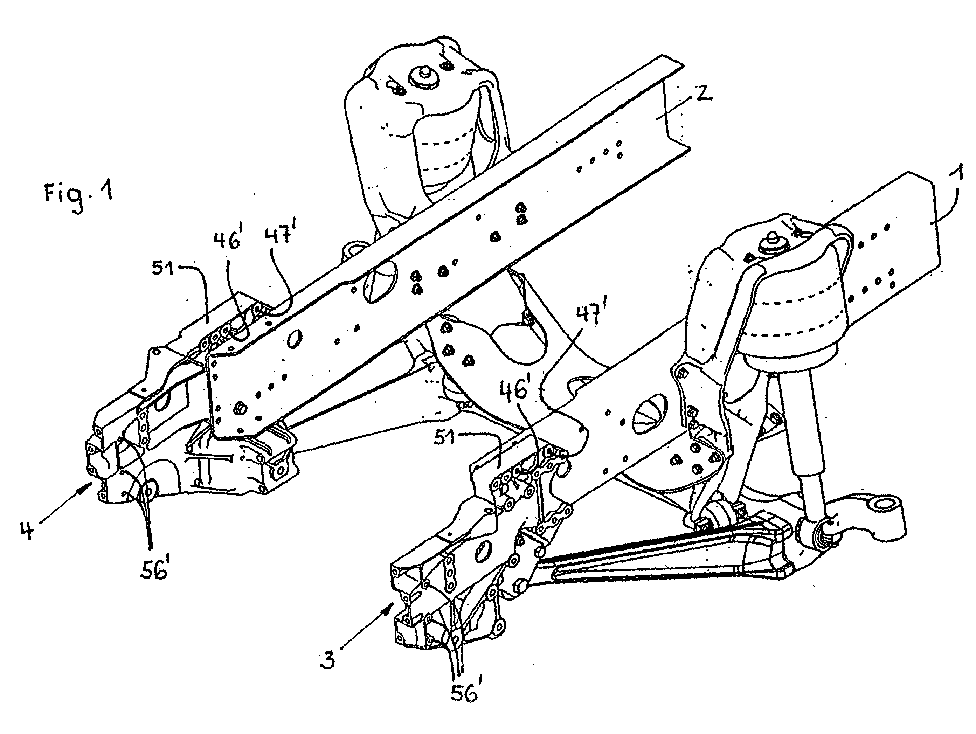

- Fig. 1: das vordere Ende eines Lastkraftwagen-Fahrgestells,
- Fig. 2: eine erste Ausführungsform der vorderen Lagerung für ein kippbares Fahrerhaus großer/hoher Bauart in Vorderansicht,
- Fig. 3: die Ausführungsform gemäß Fig. 2 in Seitenansicht von links,
- Fig. 4: die Ausführungsform gemäß Fig. 2 in Seitenansicht mit gekipptem Fahrerhaus,
- Fig. 5: die Ausführungsform der vorderen Lagerung gemäß Fig. 2 in vorderansichtiger Alleindarstellung ihrer linksseitigen Teile,
- Fig. 6: die Ausführungsform der vorderen Lagerung gemäß Fig. 2 in perspektivisch von schräg vom gesehener Alleindarstellung ihrer linksseitigen Teile,
- Fig. 7: die Ausführungsform der vorderen Lagerung gemäß Fig. 2 in draufsichtiger Alleindarstellung ihrer linksseitigen Teile,
- Fig. 8: eine zweite Ausführungsform der vorderen Lagerung für ein kippbares Fahrerhaus normalhoher Bauart in Vorderansicht,
- Fig. 9: die Ausführungsform gemäß Fig. 8 in Seitenansicht von links,
- Fig. 10: die Ausführungsform der vorderen Lagerung gemäß Fig. 8 in perspektivisch von schräg vorn gesehener Alleindarstellung ihrer linksseitigen Teile,

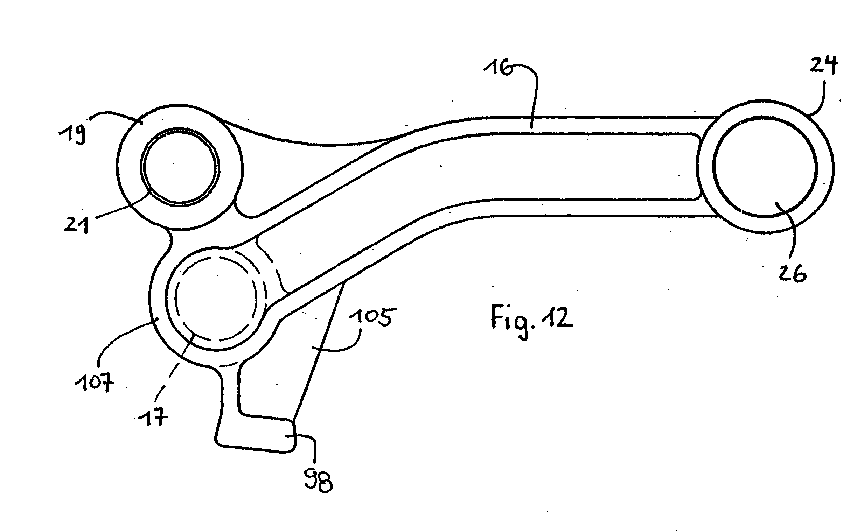

- Fig. 11: eine Ausführungsform einer U-förmigen Stabilisatorschwinge als Teil der vorderen Fahrerhaus-Lagerung in Draufsicht,
- Fig. 12: die Stabilisatorschwinge aus Fig. 11 in Seitenansicht von links,

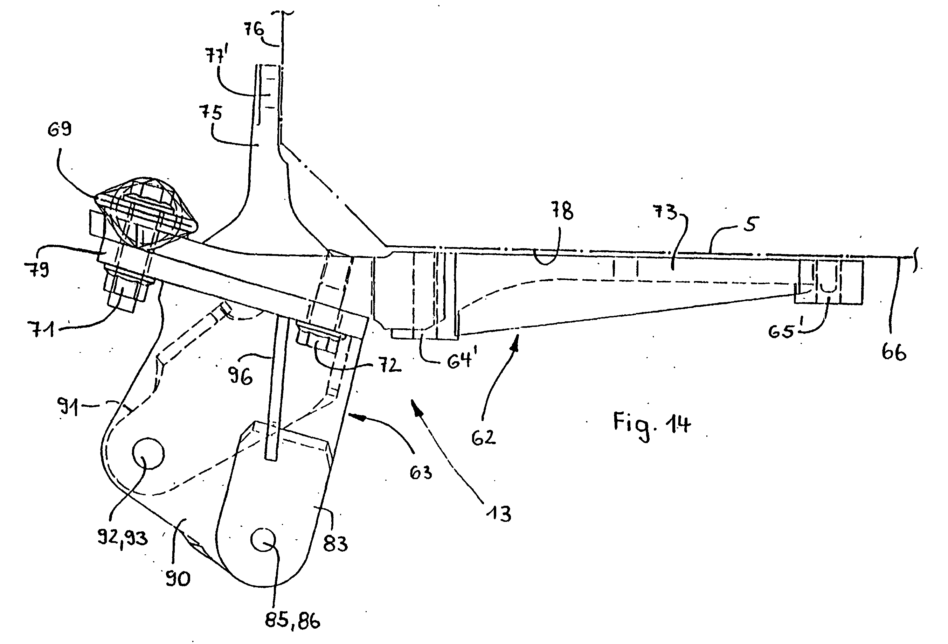

- Fig. 13: den linken Abschnitt der Stabilisatorschwinge aus Fig. 11 in Vorderansicht,

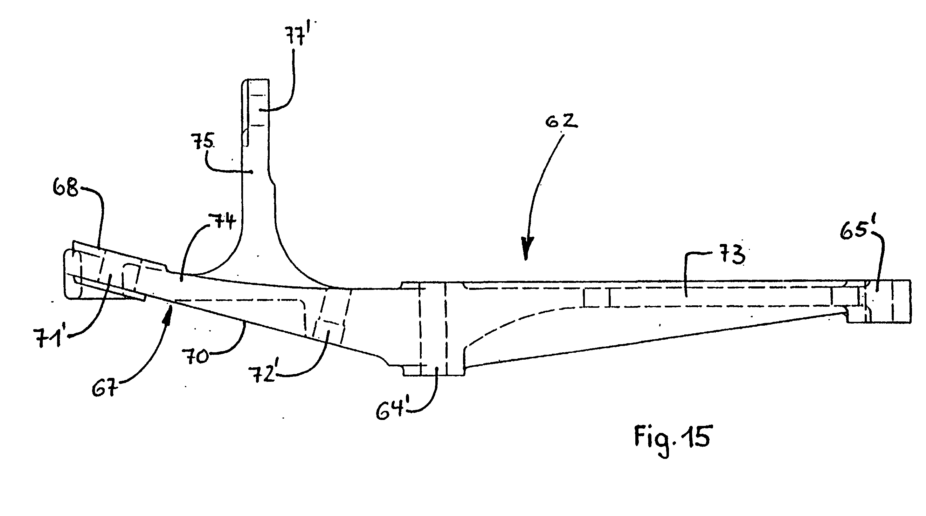

- Fig. 14: eine Ausführungsform einer Anschlußkonsole als Teil der vorderen Fahrerhaus-Lagerung in Seitenansicht,
- Fig. 15: das obere Teil der Anschlußkohsole aus Fig. 14 in seitenansichtiger Alleindarstellung,

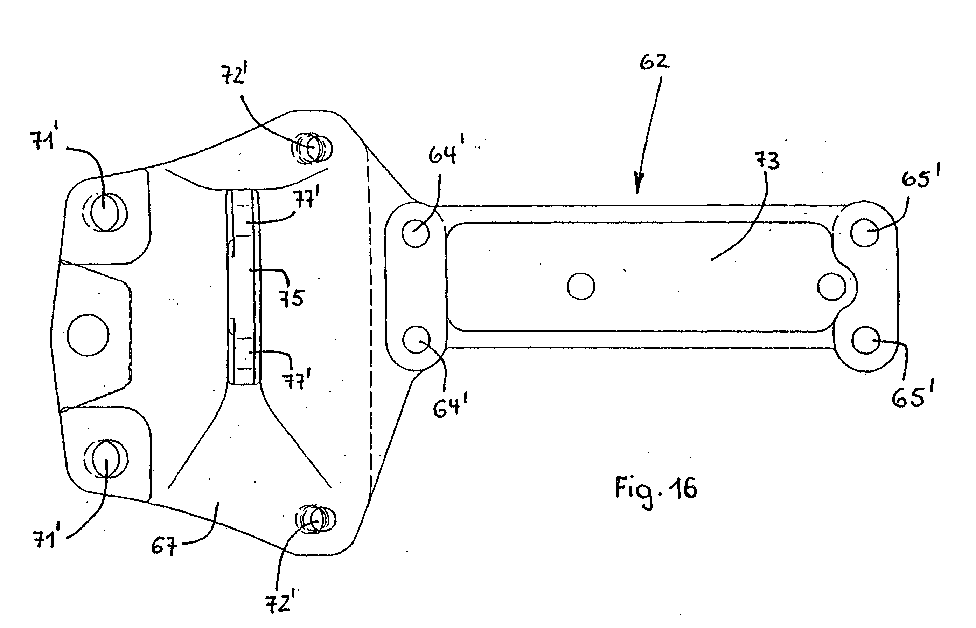

- Fig. 16: das obere Teil der Anschlußkonsole aus Fig. 14 in draufsichtiger Alleindarstellung,

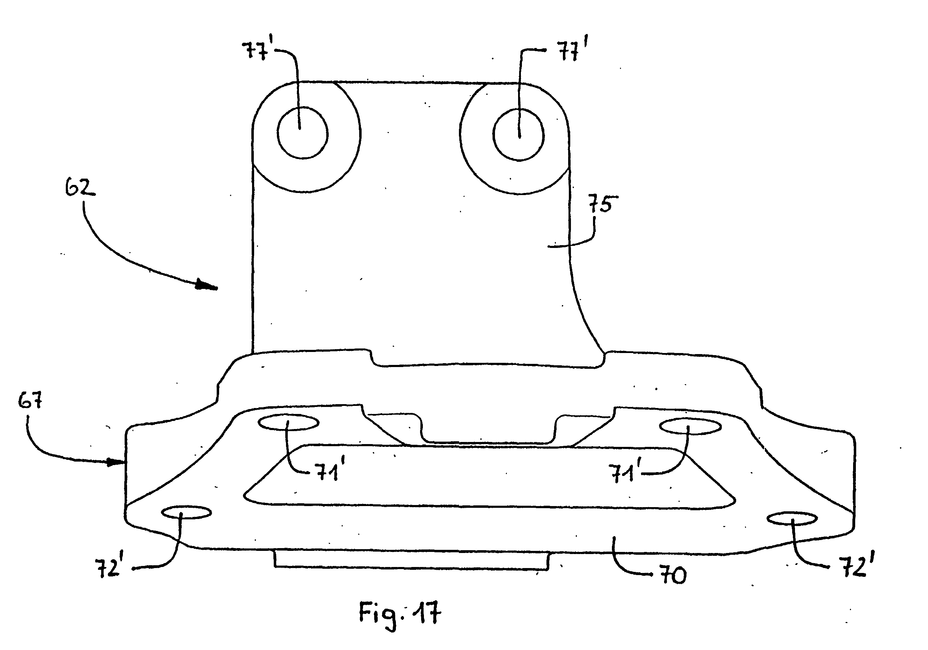

- Fig. 17: das obere Teil der Anschlußkonsole aus Fig. 14 in vorderansichtiger Alleindarstellung;

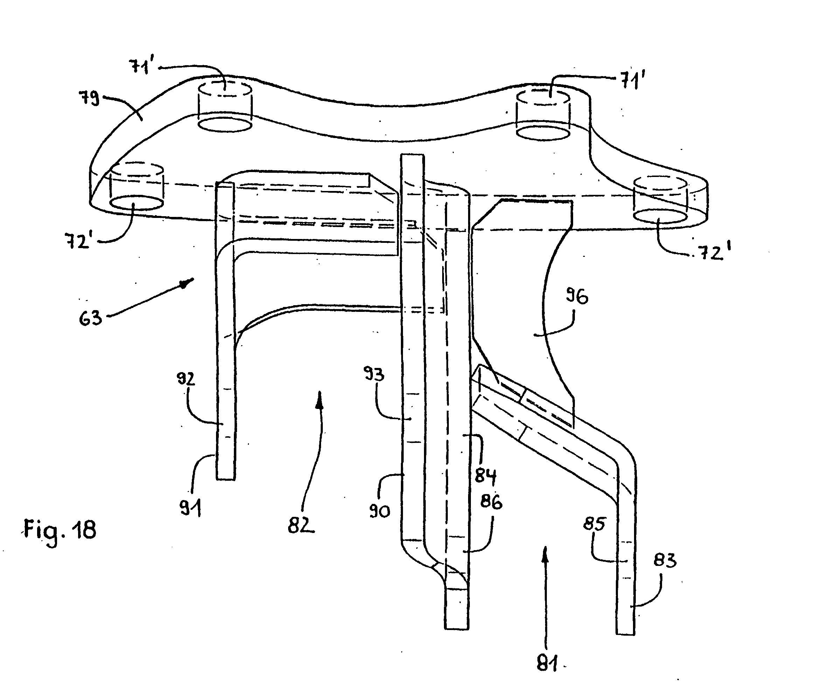

- Fig. 18: das untere Teil der Anschlußkonsole aus Fig. 14 in vorderansichtiger Alleindarstellung,

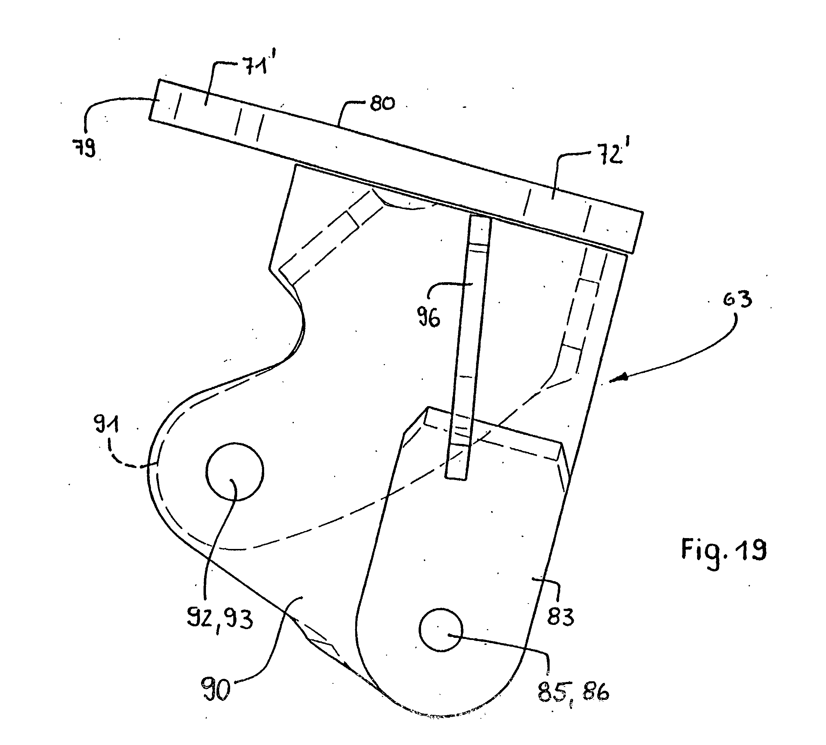

- Fig. 19: das untere Teil der Anschlußkonsole aus Fig. 14 in seitenansichtiger Alleindarstellung,

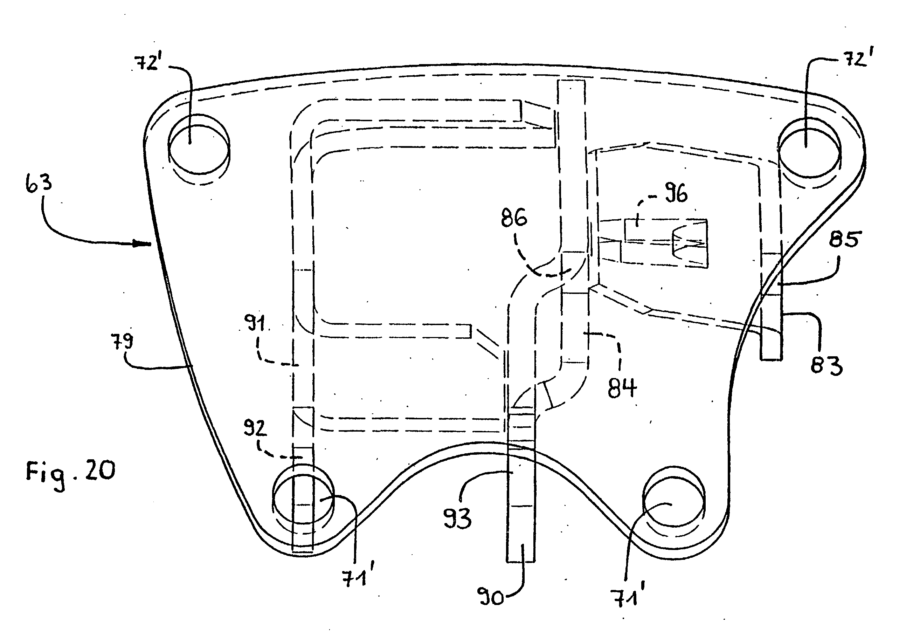

- Fig. 20: das untere Teil der Anschlußkonsole aus Fig. 14 in draufsichtiger Alleindarstellung,

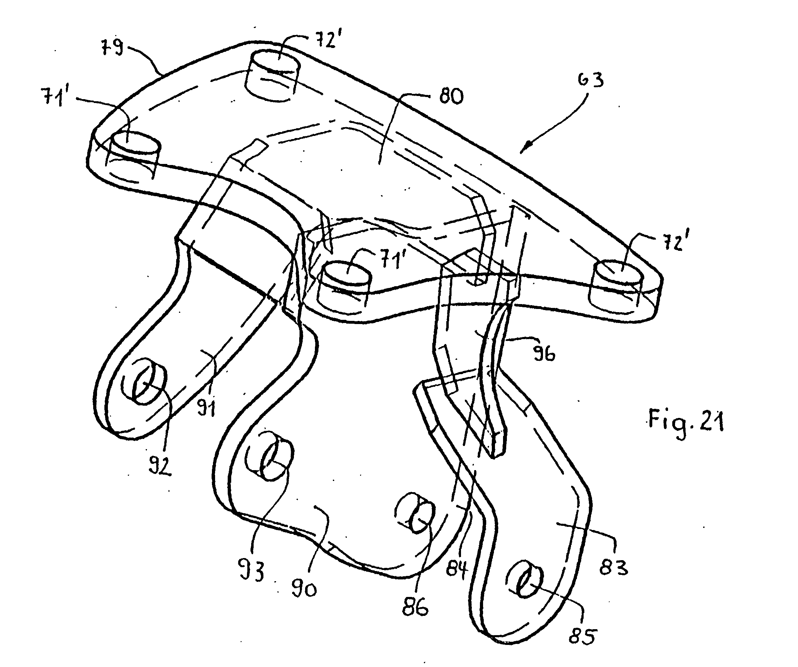

- Fig. 21: das untere Teil der Anschlußkonsole aus Fig. 14 in perspektivischer Ansicht von schräg vorne,
- Fig. 22: das Hauptteil eines hinteren Lagerbockes aus der Ausführungsform gemäß Fig. 2 bis 7 in Seitenansicht,
- Fig. 23: das Hauptteil eines hinteren Lagerbockes aus der Ausführungsform gemäß Fig. 2 bis 7 in Draufsicht,
- Fig. 24: das Hauptteil eines hinteren Lagerbockes aus der Ausführungsform gemäß Fig. 8 bis 10 in Seitenansicht,
- Fig. 25: das Hauptteil eines hinteren Lagerbockes aus der Ausführungsform gemäß Fig. 8 bis 10 in Draufsicht.

In den einzelnen Figuren sind gleiche beziehungsweise einander entsprechenden Teile mit gleichem Bezugszeichen angezogen.

Von dem Lastkraftwagen sind als Teile von dessen Fahrgestell-Rahmen die beiden Rahmen-Längsträger mit 1 und 2 bezeichnet. Am vorderen Ende jedes derselben ist ein Multifunktionslagerschild 3, 4 befestigt. Diese vorderen Multifunktionslagerschilde 3, 4 dienen zur Aufnahme einer Vielzahl von Fahrzeugteilen, so auch solchen, die der vorderen Lagerung des Fahrerhauses 5 zuzurechnen sind.

Die vordere Fahrerhaus-Lagerung umfaßt folgende Bauteile, nämlich zwei Feder-Dämpfer-Beine 6, 7, eine von oben gesehen U-förmige Stabilisatorschwinge 8, zwei hintere Lagerböcke 9, 10, zwei Feder-Dämpfer-Bein-Halter 11, 12 und zwei vordere Anschlußkonsolen 13, 14. Die linksseitigen Bauteile der Fahrerhaus-Lagerung sind bezogen auf die Fahrzeuglängsachse spiegelsymmetrisch zu den rechtsseitigen Bauteilen ausgebildet und angeordnet.

Die U-förmige Stabilisatorschwinge 8 besteht aus einem rechten Längsarm 15, einem linken Längsarm 16, einer diese vorne miteinander verbindenden Querstange 17 und zwei, jeweils oberhalb des Übergangsbereiches zwischen Querstange 17 und einem Längsarm 15, 16 angeordneten Lageraugen 18, 19. In diese Lageraugen 18, 19 sind Lager 20, 21 eingebaut, deren Rotationsachsen in einer horizontalen Querlinie 22 zueinander fluchten. Außerdem ist am hinteren Ende jedes der beiden Längsarme 15, 16 der Stabilisatorschwinge 8 ebenfalls ein Lagerauge 23, 24 mit eingebautem Lager 25, 26 vorgesehen, deren Rotationsachsen ebenfalls in einer horizontalen Qüerlinie 27 zueinander fluchten, welche parallel zur Querlinie 22 verläuft.

Die U-förmige Stabilisatorschwinge 8 kann entweder als einstückiges Gesenkschmiede- oder Stahlgußteil realisiert oder alternativ hierzu aus drei vorgefertigten Einzelteilen zusammengesetzt sein. In letzterem Fall können die beiden Längsarme 15, 16 einschließlich aller Lageraugen und anderer Teile jeweils entweder durch ein Gesenkschmiede- oder Stahlgußteil und die Querstange 17 entweder durch ein Rohr oder ebenfalls ein vollmaterialiges Gesenkschmiedeteil gebildet sein. Nach entsprechender spanabhebender Nachbehandlung werden diese drei Teile dann miteinander verschweißt.

Die Längsarme 15, 16 der Stabilisatorschwinge 8 sind so geformt und angeordnet, daß sie bei einem Frontalcrashvorgang des Lastkraftwagen in Längsrichtung gezielt deformierbar sind und gleichzeitig eine energieabsorbierende Wirkung entfalten. Hierzu sind die Längsarme 15, 16 der Stabilisatorschwinge 8 zwischen vorderem und hinterem Ende - von der Seite betrachtet - leicht nach oben durchgebogen und - von oben betrachtet - ungerade, beispielsweise S-förmig oder Z-förmig ausgebildet, was bei einem Frontalcrashvorgang definiert verformbare Falt-, Biege- oder Knickzonen bedeutet. Vorzugsweise sind die beiden Längsarme 15, 16 innerhalb der U-förmigen Stabilisatorschwinge 8 gepfeilt zueinander in dem Sinne angeordnet, daß deren hintere Enden 23, 24 weniger weit voneinander beabstandet sind als deren vordere Enden 18, 19.

Die U-förmige Stabilisatorschwinge 8 ist über die hinten an den Längsarmen 15, 16 angeordneten Lageraugen 23, 24 und die darin eingebauten Lager 25, 26 längsund quergeführt sowie um die Rotationsachse - Linie 27 - schwenkbar an den beiden Lagerböcken 9, 10 angelenkt. Jeder derselben ist hinten oben an einem der beiden Multifunktionslagerschilde 3, 4 lösbar befestigt, und zwar an seinem unteren beiden Multifunktionslagerschilde 3, 4 lösbar befestigt, und zwar an seinem unteren Endbereich 28 durch zwei Schraubverbindungen 29, 30, wovon die eine (29) ganz vorne und die andere (30) ganz hinten angeordnet ist. Außerdem weist jeder hintere Lagerbock 9, 10 oberhalb dieser Befestigungszone 28, aber unterhalb der Abschlußebene für die Stabilisatorschwinge 8 eine im Frontalcrashfall des Lastkraftwagen definiert verformbare Falt- oder Knickzone auf, die durch konstruktive Maßnahmen wie Querschnittsreduzierungen, Materialschwächungen, Einbuchtungen, Einschnürungen oder dergleichen realisiert sein kann.

Im dargestellten Beispiel ist jeder Lagerbock 9, 10 aus zwei Teilen zusammengesetzt, einem definiert verformbaren Hauptteil 31 und einem vorne an diesem angeflanscht mittels Verschraubungen 32 befestigten Anschlußteil 33, an dem ein Längsarm 15 bzw. 16 der Stabilisatorschwinge 8 über das hintenendig gegebene Lagerauge und das darin eingebaute Lager quergeführt sowie über eine querdurchgehende Lagerachse bzw. -schraube 40 längsgeführt und schwenkbar angelenkt ist.

Sowohl das Hauptteil 31 als auch das Anschlußteil 33 eines Lagerbockes 9, 10 ist vorzugsweise durch jeweils ein Blechbiegeteil realisiert.

Bei Ausführung als Blechbiegeteil ist das Anschlußteil 33 jedes Lagerbockes 9,10 in Draufsicht gesehen U-förmig gebogen und weist im einzelnen hinten eine ebene Anschlußplatte 34 mit mehreren Schraubendurchführungslöchern 35 sowie beidseitig an der Anschlußplatte 34 senkrecht nach vorn und parallel zueinander angeordnet abgewinkelte Seitenwangen 36, 37 mit zueinander fluchtenden Bohrungen 38, 39 für Hindurchführung einer Lagerachse bzw. Lagerschraube 40 auf.

Das Hauptteil 31 eines Lagerbockes 9,10 weist bei Ausführung als Blechbiegeteil eine ebene und leicht nach hinten geneigte vordere Anschlußplatte 41 mit mehreren Schraubendurchführungslöchern 42 für das vorderseitige Anflanschen und Befestigen des Anschlußteiles 33 mittels einer entsprechenden Anzahl von Schraubverbindungen 43 auf. An der vorderen Anschlußplatte 41 schließen sich beiderseits jeweils nach hinten abgewinkelte, parallel zueinander verlaufend angeordnete Seitenwangen 44, 45 an, in deren unterem Bereich Schraubendurchführungslöcher 46, 47 für die beiden Schraubverbindungen 29, 30 ausgebildet sind. Die zugehörigen Schraubendurchführungslöcher im jeweiligen Multifunktionslagerschild sind mit 46' und 47' bezeichnet.

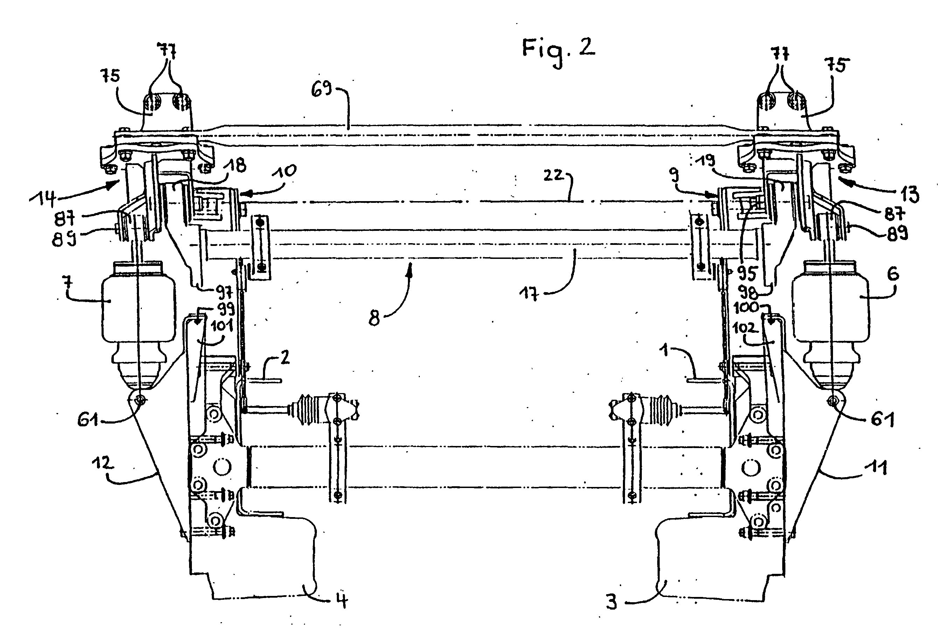

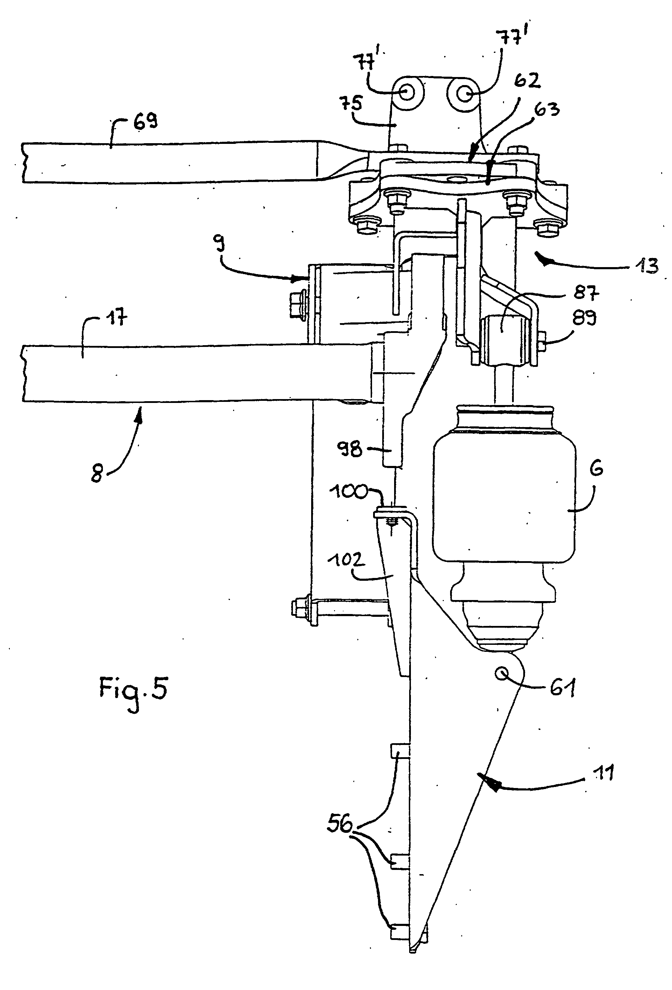

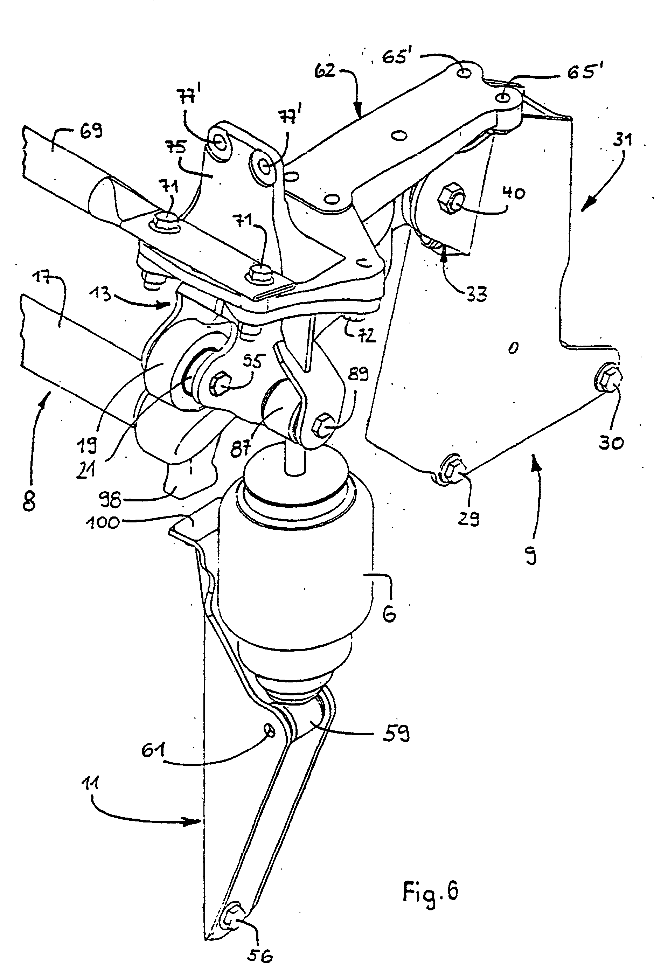

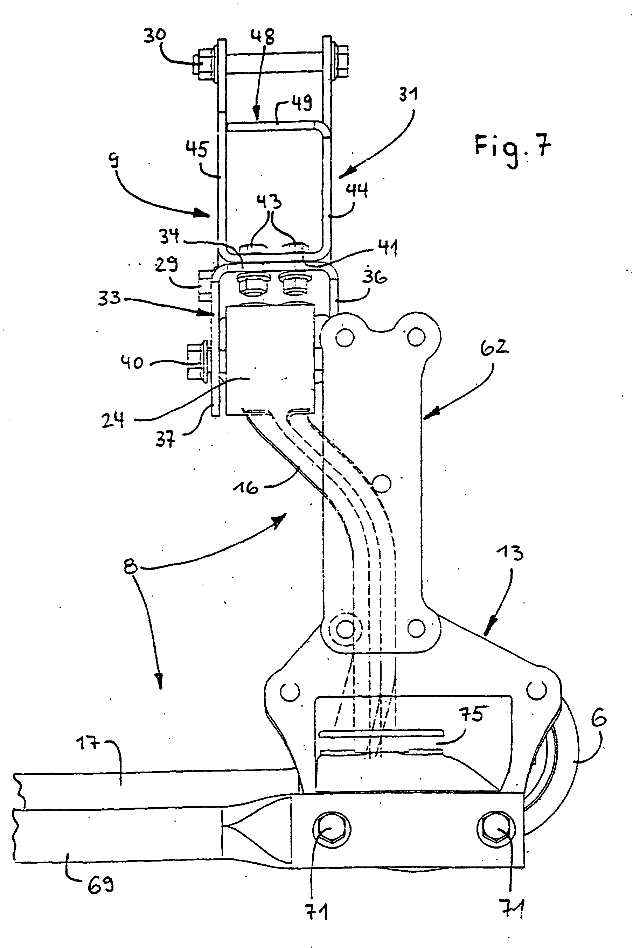

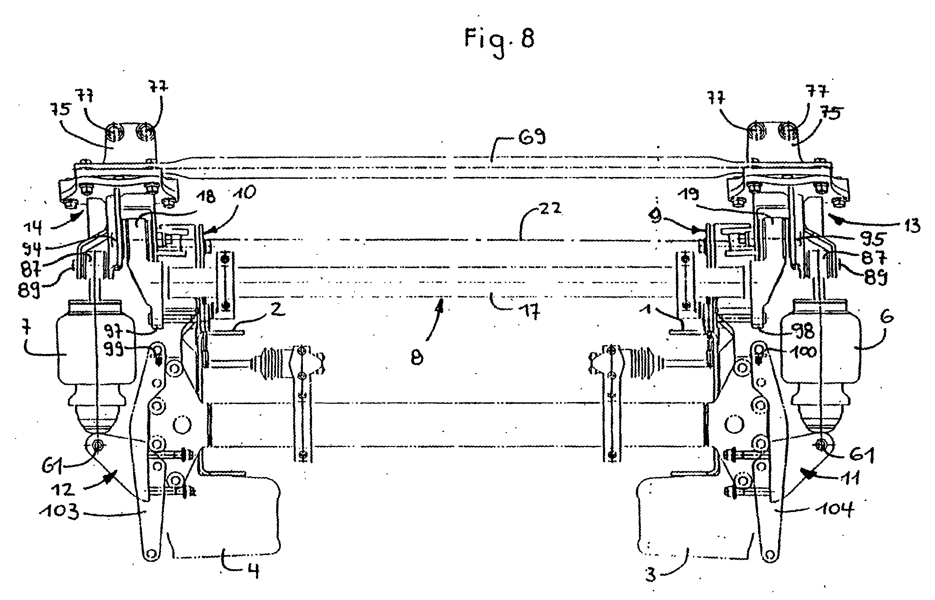

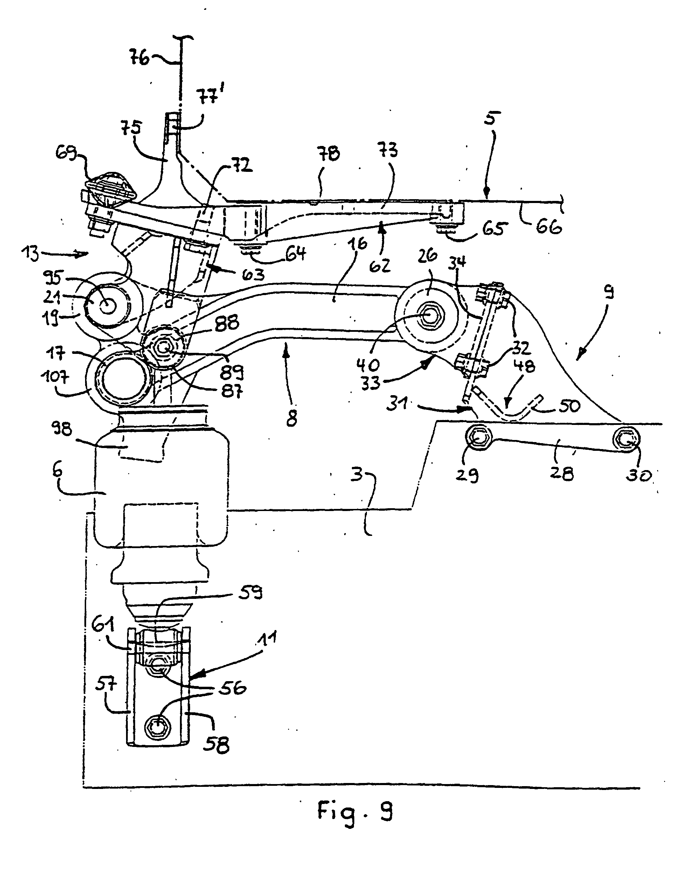

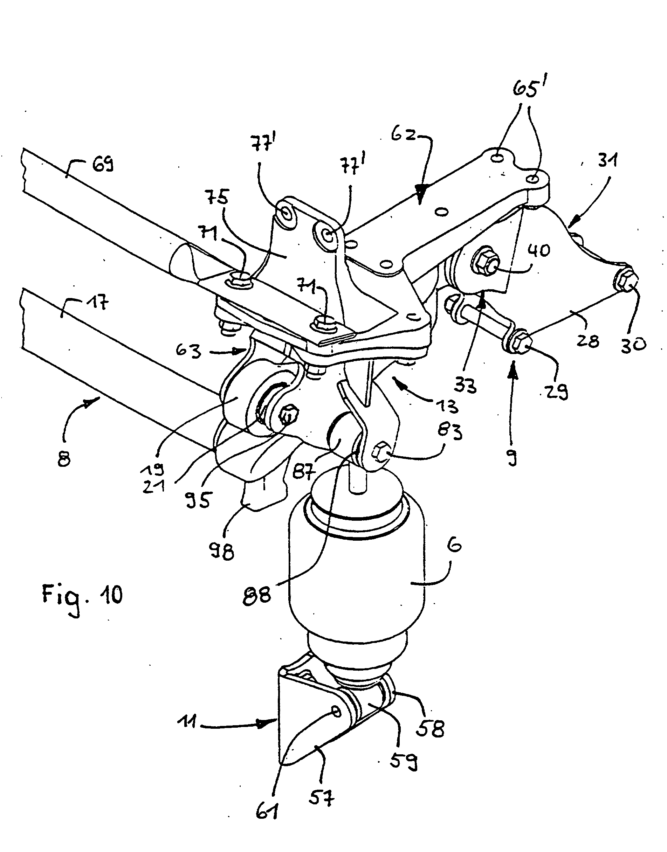

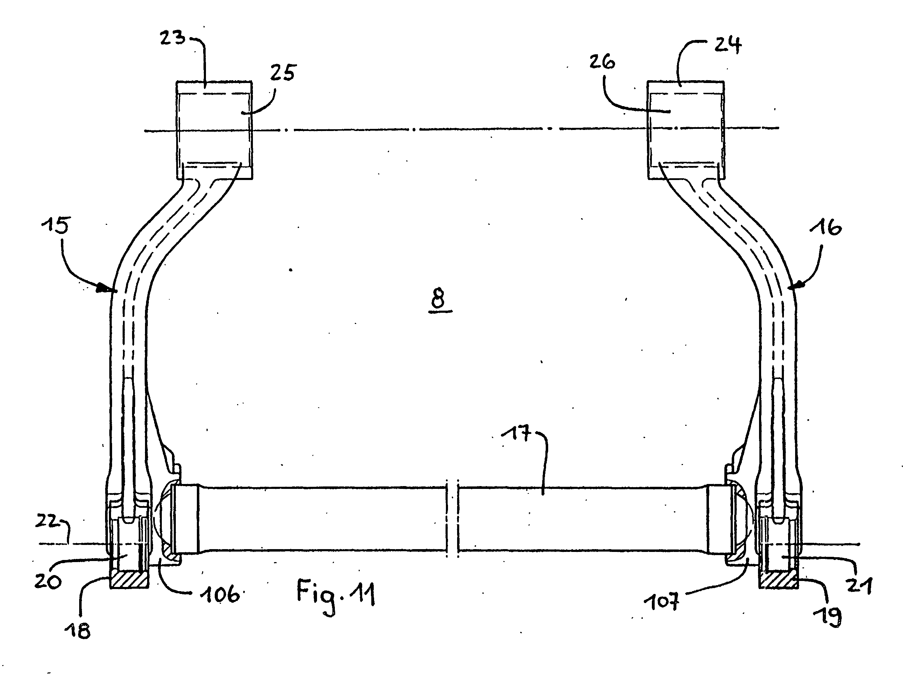

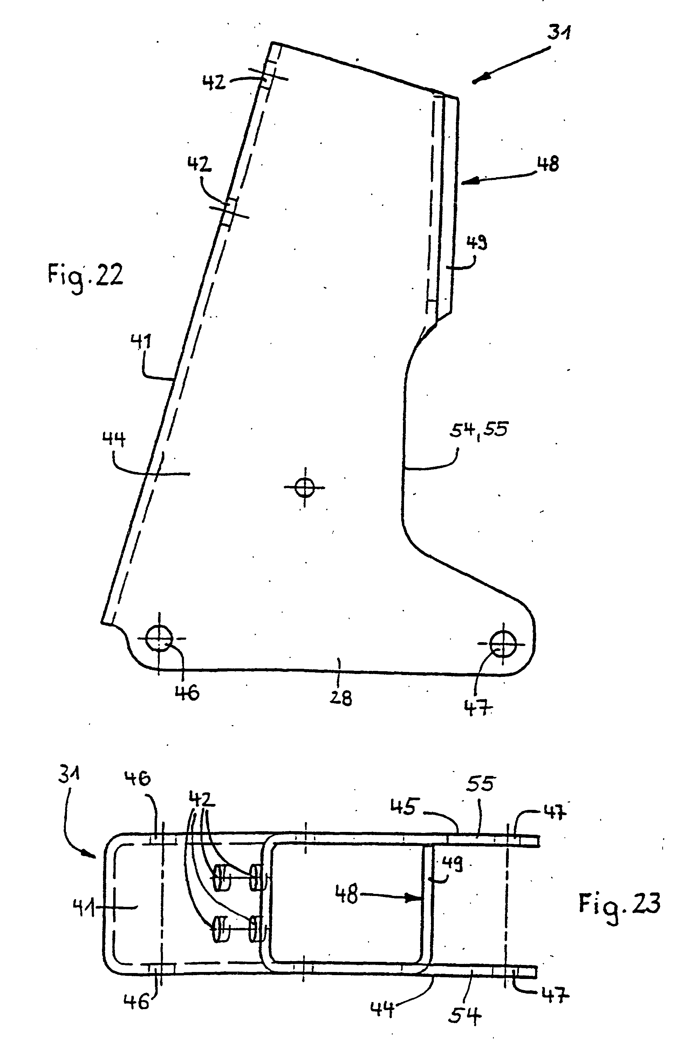

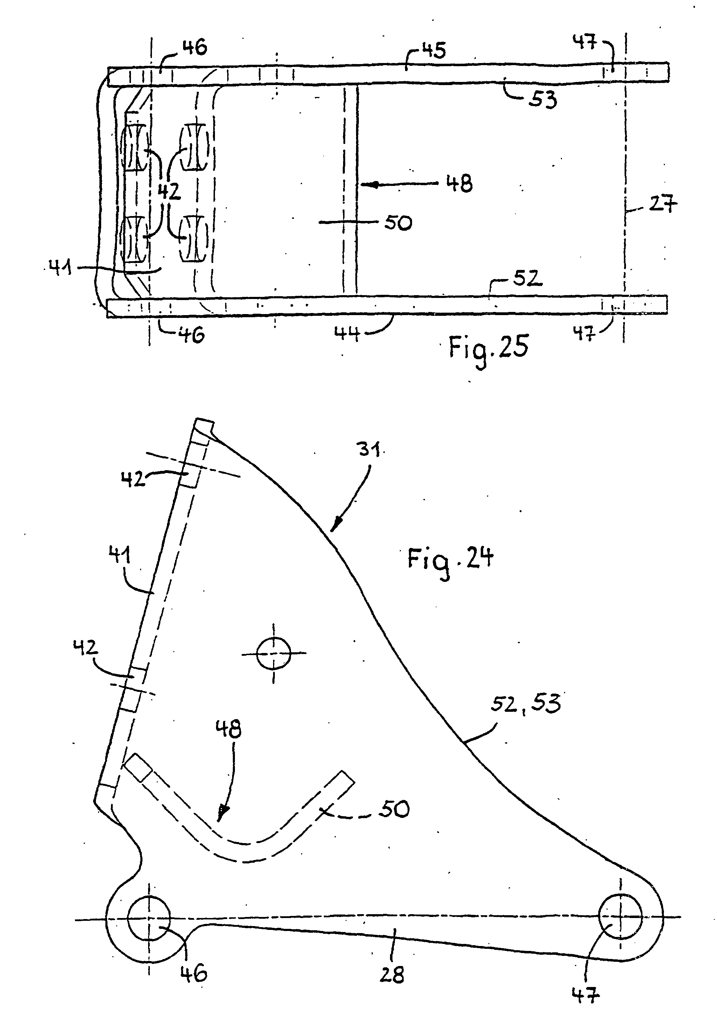

Darüber hinaus sind die beiden Seitenwangen 44, 45 des Hauptteils 31' eines Lagerbocks 9, 10 durch eine deren Abstand sicherstellende, nicht in der Deformationszone angeordnete Quertraverse 48 miteinander verbunden. Im Beispiel gemäß Figuren 2 bis 7 und 22, 23 ist die Quertraverse 48 durch eine hintenendig an einer Seitenwange 44 oder 45 zur gegenüberliegenden Seitenwange 45 bzw. 44 hin abgewinkelte und sich an dieser abstützend angeschweißten Querwange 49 gebildet. Im Beispiel gemäß den Figuren 8 bis 10 und 24, 25 ist die Quertraverse 48 dagegen im vorderen Bereich des Hauptteils 31 eines jeden Lagerbockes 9, 10, aber räumlich hinter der vorderen Schraubverbindung 29 angeordnet und beispielsweise durch ein Winkelprofilstück 50 (wie dargestellt), einen Bolzen oder ein Rohrstück realisiert, das zwischen den beiden Seitenwangen 44, 45 sich erstreckend mit diesen verschweißt ist. In diesem Fall dient die Quertraverse 50 als Anschlag, der im Frontalcrashfall des Lastkraftwagen bei Deformation des hinteren Lagerbockes 9, 10 rotatorisch um die vordere Schraubverbindung 29 auf der Oberseite 51 des den Lagerbock 9 bzw. 10 aufnehmenden Multifunktionslagerschildes 3 bzw. 4 wegbegrenzend zur Anlage kommt.

Es besteht außerdem die Möglichkeit, den Abstand der vorderen Schraubendurchführungslöcher 46 zur Peripherie des Lagerbockes 9, 10 so zu bemessen und/oder die vordere Schraubverbindung 29, mit der ein Lagerbock 9 bzw. 10 am Multifunktionslagerschild 3 bzw. 4 befestigt ist, auf eine solche Grenzbelastung auszulegen, daß dann, wenn im Frontalcrashfall der während der Deformation mit seiner anschlagbildenden Quertraverse 50 an der Multifunktionslagerschild-Oberseite 51 zur Anlage gekommene und maximal bzw. weitestgehend deformierte Lagerbock 9 bzw. 10 weiterhin einer nach hinten gerichteten Horizontalkraft ausgesetzt ist, die vordere Verbindung sich auflöst, dabei der Lagerbock 9, 10 zur Peripherie hin ausreißt und/oder die vordere Schraubverbindung 29 abreißt und der Lagerbock 9 bzw. 10 sich dann rotatorisch um die hintere Schraubverbindung 30 nach hinten bis zum kompletten Überschlag verschwenken kann.

Die Verformung des Lagerbockes 9 bzw. 10 im Frontalcrashfall wird - wie bereits weiter vorne angedeutet - durch konstruktive Maßnahmen bewirkt. Im Beispiel gemäß Figuren 8 bis 10 und 24, 25 weist hierzu der Lagerbock 9 bzw. 10 auf der Rückseite seines Hauptteil 31 hintere Einbuchtungen 52, 53 an seinen Seitenwangen 44, 45 auf. Im Beispiel gemäß Figuren 2 bis 7 und 22, 23 weist der Lagerbock 9, 10 auf der Rückseite seines Hauptteils 31 unterhalb der Querwange 49 an seinen Seitenwangen 44, 45 hintere Einbuchtungen 54, 55 auf. Im Bereich der den Querschnitt in Längsrichtung gesehen reduzierenden Einbuchtungen 52, 53 bzw. 54, 55 knickt der Lagerbock 9, 10 im Frontalcrashfall bei von vorn wirkender Kraft, die oben über die Stabilisatorschwinge 8 her eingeleitet wird, ein.

Das Fahrerhaus 5 ist mit seinem Boden 66 vorne auf den beiden Anschlußkonsolen 13, 14 befestigt, mit diesen an den beiden Feder-Dämpfer-Beinen 6, 7 angelenkt und über diese gegenüber dem Fahrgestell-Rahmen 1, 2 abgefedert. Für die Abstützung der Feder-Dämpfer-Beine 6, 7 am Fahrgestell-Rahmen sind die beiden Feder-Dämpfer-Bein-Halter 11, 12 vorgesehen. Jeder derselben ist seitlich außen in gleischer Höhenlage an einem Multifunktionslagerschild 3 bzw. 4 lösbar mittels Schraubenlöcher 56' durchsetzender Schraubverbindungen 56 befestigt und nimmt zwischen zwei Seitenwangen 57, 58 quergeführt sowie schwenkbar das am unteren Ende eines Feder-Dämpfer-Beines 6 bzw. 7 angeordnete Lagerauge 59 mit eingebauten Lager 60 auf. Eine in Fahrzeuglängsrichtung quer durchgehende Lagerachse 61 stellt die Verbindung zwischen. Lager 60 und Feder-Dämpfer-Bein-Halter 11 bzw. 12 her und bildet die Schwenkachse für das solchermaßen angelenkte Feder-Dämpfer-Bein 6 bzw. 7. Das obere Ende eines jeden Feder-Dämpfer-Beines 6, 7 ist in einer Anschlußkonsole 13 bzw. 14 gefaßt.

Jede der beiden Anschlußkonsolen 13, 14 ist aus zwei Teilen zusammengesetzt, nämlich einem oberen Tragteil 62, auf dem das Fahrerhaus 5 befestigt ist, und einem unteren Lagerteil 63, an dem ein Feder-Dämpfer-Bein 6 bzw. 7 und an anderer Stelle die Stabilisatorschwinge 8 mit einem der beiden an ihr angeordneten La geraugen 18, 19 mit eingebauten Lagern 20, 21 angelenkt sind.

Das obere Tragteil 62 jeder Anschlußkonsole 13, 14 ist durch eine großflächige Platte gebildet, die mit ihrem hinteren Abschnitt 73 über mehrere Vertikalverschrau bungen 64, 65 am Fahrerhaus-Boden 66 befestigt ist und mit einem vorderen Abschnitt 74 den Fahrerhaus-Boden 66 vorne um ein gewisses Maß überragt und eine schräge Stützrampe 67 bildet. An der freien Oberseite 68 der Stützrampe 67 bzw. des vorderen Abschnitts 74 ist eine die Lage der beiden Anschlußkonsolen 13, 14 stabilisierende Querstange 69 und an der schräg nach vom oben ansteigenden Unterseite 70 der Stützrampe 67 ist ein Lagerteil 63 einer Anschlußkonsole 13, 14 jeweils mittels mehrerer vorderer und hinterer Vertikalverschraubungen 71, 72 befestigbar.

Die Oberseite eines jeden Anschlußkonsolen-Tragteils 62 ist im hinteren Abschnitt 73 eben ausgebildet und im vorderen Abschnitt 74 schräg nach oben hoch gezogen, an dessen vorderstem Abschnitt 68 die Querstange 69 aufgelagert und befestigt ist. Die Dicke der Tragteil-Platte nimmt von hinten beginnend bis etwa zur Mitte ihrer Längserstreckung keilförmig bis zu einem Höchstmaß zu und dann von dieser dicksten Querschnittsstelle bis zum vorderen Ende wieder auf ein bestimmtes Maß ab, wobei dieser zuletzt genannte Bereich die Stützrampe 67 bildet.

Das Tragteil 62 jeder Anschlußkonsole 13, 14 weist am Übergang zwischen ebenem Plattenbereich und schrägen Stützrampenbereich einen nach oben abragenden Befestigungsflansch 75 auf, an dem der Fahrerhaus-Boden 66 mit einer hochgezogenen Vorderkante 76 auf Anschlag angeschlossen und mittels mehrerer Horizontalverschraubungen 77 befestigt ist. Die zugehörigen Schraubenlöcher sind mit 77' bezeichnet. Der sich nach hinten anschließende Fahrerhaus-Boden-Bereich 78 ist auf der ebenen Oberseite des hinteren Abschnitts 73 des Anschlußkonsolen-Tragteils 62 aufgelagert und dort mittels der Vertikalverschraubungen 64, 65 festgespannt, wobei die vorderen Vertikalverschraubungen 64 im Bereich der größten Plattendicke und die Vertikalverschraubungen 65 am hinteren Platten-Endbereich angeordnet sind. Die zugehörigen Schraubenlöcher sind mit 64' bzw. 65' bezeichnet.

Das Lagerteil 63 jeder Anschlußkonsole 13, 14 weist oben eine Stirnplatte 79 mit ebener Oberseite 80 auf, mit der es an der ebenen Unterseite 70 der Stützrampe 67 eines Anschlußkonsolen-Tragteils 62 angeflanscht und dort mittels der Vertikalverschraubungen 71, 72 festgespannt ist. Die zugehörigen Schraubenlöcher in den Platten 67 und 79 sind mit 71' bzw. 72' bezeichnet.

Die vorderen Vertikalverschraubungen 71, mit denen das Lagerteil 63 jeder Anschlußkonsole 13, 14 mit seiner Stirnplatte 79 an der Stützrampe 67 eines Anschlußkonsolen-Tragteils 62 festgespannt ist, werden vorzugsweise auch zur Befestigung der Querstange 69 vorne am Tragteil-Oberseitenabschnitt 74 herangezogen.

Das Lagerteil 63 jeder Anschlußkonsole 13, 14 weist außer der Stirnplatte 79 ein von dieser nach unten beabstandetes erstes äußeres Maul 81 sowie ein zweites, weiter oben, aber ebenfalls von der Stirnplatte 79 nach unten beabstandetes inneres Maul 82 auf. Das äußere Maul 81 ist seitlich von Wänden 83, 84 mit diese durchsetzenden, horizontal quer fluchtenden Bohrungen 85, 86 begrenzt und dient zur seitengeführten Aufnahme sowie Lagerung des aus einem Lagerauge 87 mit eingebauten Lager 88 bestehenden oberen Endes eines Feder-Dämpfer-Beines 6 bzw. 7 mittels einer querdurchgehenden Lagerachse 89 am Lagerteil 63 einer Anschlußkonsole 13, 14. Das innere Maul 82 in jedem Anschlußkonsolen-Lagerteil 63 ist ebenfalls seitlich durch Wände 90, 91 mit diese durchsetzenden, horizontal quer fluchtenden Bohrungen 92, 93 begrenzt und dient zur seitengeführten Aufnahme und Lagerung eines vorderendig an der Stabilisatorschwinge 8 angeordneten Lagerauges 18 bzw. 19 samt darin eingebautem Lager 20 bzw. 21 mittels einer querdurchgehenden Lagerachse 94 bzw. 95 am Lagerteil 63 einer Anschlußkonsole 13, 14.

Im dargestellten Beispiel sind die innere Begrenzungswand 84 des ersten äußeren Maules 81 und die äußere Begrenzungswand 90 des zweiten inneren Maules 82 durch eine einzige gemeinsame Zwischenwand gebildet. Alle maulbegrenzenden Wände 83, 84, 90, 91 sind an der Unterseite der oberen Stirnplatte 79 abgestützt angeschlossen.

Das untere Lagerteil 63 jeder Anschlußkonsole 13, 14 kann entweder durch ein Stahlgußteil oder durch eine Schweißkonstruktion aus mehreren miteinander verschweißten Stahlblechen realisiert sein. In letzterem Fall ist die äußere Begrenzungswand 83 des äußeren Mauls 81 zur inneren Begrenzungswand 84 hin gebogen, dort angeschweißt und außerdem durch eine Vertikalrippe 96 zur Stirnplatte 79 hin abgestützt.

Das obere Tragteil 62 jeder Anschlußkonsole 13, 14 ist vorzugsweise durch ein Sphärogußteil realisiert

Die vorderen Vertikalverschraubungen 71, mit denen das Lagerteil 63 jeder Anschlußkonsole 13, 14 mit seiner oberen Stirnplatte 79 an der Stützrampe 67 eines Anschlußkonsolen-Tragteils 62 festgespannt ist, sind vorzugsweise auf eine solche Grenzbelastung ausgelegt, daß dann, wenn im Frontalcrashfall des Lastkraftwagens verschiedene Deformationszonen in den Fahrerhaus-Lagerorganen 9, 10, 15, 16 bis an ihre vorgegebenen Grenzen verformt sind, die besagten vorderen Vertikalverschraubungen 71 abreißen, die benachbarten hinteren Vertikalverschraubungen 72 aber nur gedehnt werden und jedes Anschlußkonsolen-Lagerteil 63 sich dann rotatorisch um diese hinteren Vertikalverschraubungen 72 bewegen kann, wodurch sich ein Axialversatz der von der Stirnplatte 63 nach unten beabstandeten Feder-Dämpfer-Bein- und Stabilisatorschwinge-Anlenkstellen 81, 82 nach hinten ergibt.

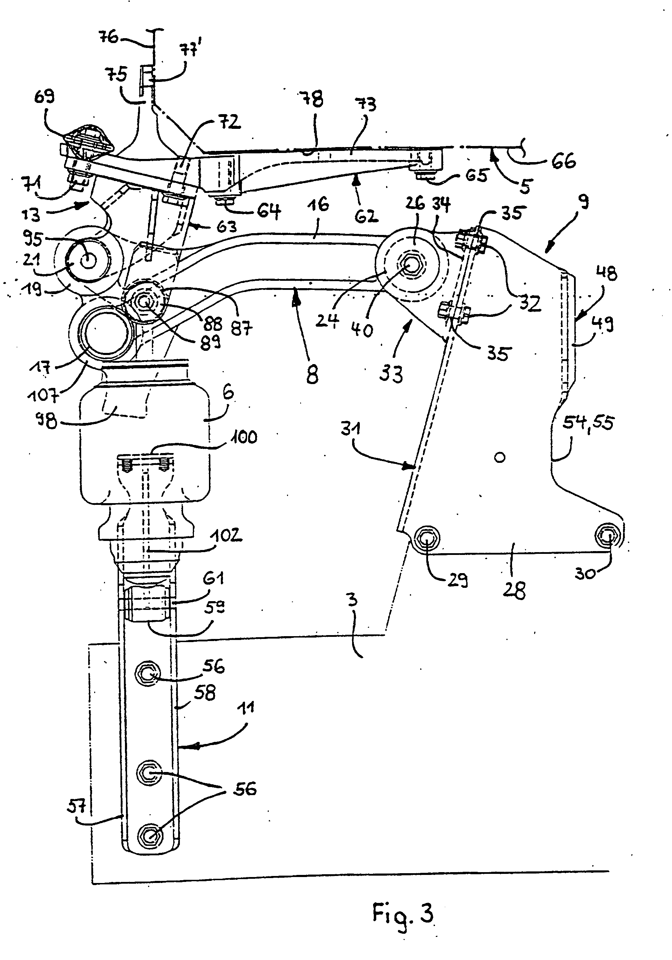

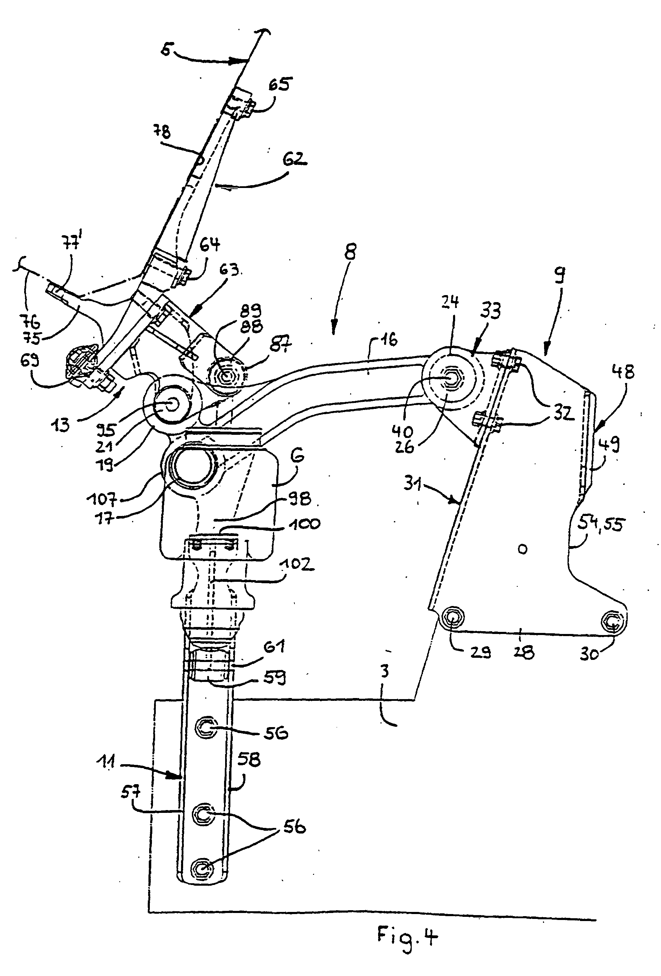

Die vordere Fahrerhaus-Lagerung verfügt auch über eine das Einfedern des Fahrerhauses beim Kippen begrenzende Einrichtung. Diese besteht aus zwei gleichlangen Anschlagfüßen 97, 98, von denen jeder unten abragend am vorderen Ende jeweils eines Längsarmes 15, 16 der U-förmigen Stabilisatorschwinge 8 angeordnet ist, und zwei zugehörigen rahmenfest angeordneten Anschlägen 99, 100. Im Fall des Ausführungsbeispiels gemäß Fig. 2 bis 7 ist der Anschlag 99 bzw. 100 durch eine austauschbare Anschlagplatte gebildet, die an einem hochgezogenen, durch einen Quersteg gebildeten oberen Ende eines Feder-Dämpfer-Bein-Halters 11 bzw. 12 gegebenenfalls elastisch nachgiebig oder abgefedert befestigt ist, wobei der die Anschlagplatte tragende Halter-Quersteg und die hochgeführte Halter-Wand durch eine mit ihnen verschweißte Versteifungsrippe 101 bzw. 102 unterstützt sind. Fig. 3 zeigt das Fahrerhaus in ungekippter Position und dabei die Anschlagfüße 97, 98 in einem solchen Abstand von den zugehörigen Anschlägen 99 bzw. 100, daß das normale Einfedern des Fahrerhauses 5 während der Fahrt nicht behindert wird. Fig. 4 dagegen zeigt das Fahrerhaus 5 in maximal gekippter Stellung, in der die Anschlagfüße 97 bzw. 98 auf den Anschlägen 99 bzw. 100 aufsitzen und so das weitere Einfedern der Feder-Dämpfer-Beine 6, 7 behindern. Während dieses Fahrerhaus-Kippvorganges beschreiben die Anschlagfüße 97, 98 eine rotatorische Bewegung um die Rotationsachse 27, die durch die hinterendigen Lager-Verschraubungen 40 der U-förmigen Stabilisatorschwinge 8 mit den Lagerböcken 9, 10 geht.

Im Fall des Ausführungsbeispiels gemäß Fig. 8 bis 10 ist der Anschlag 99, 100 nicht am Feder-Dämpfer-Bein-Halter 11 bzw. 12, sondern an einem eigenen Halter 103 bzw. 104 angeordnet, der wiederum an einem der beiden Multifunktionslagerschilde 3 bzw. 4 befestigt ist und im übrigen noch anderen, hier nicht interessierenden Zwecken dient. Die Lage, Ausbildung und Befestigungsart der Anschlagplatten sind gleich wie im vorgeschilderten Fall.

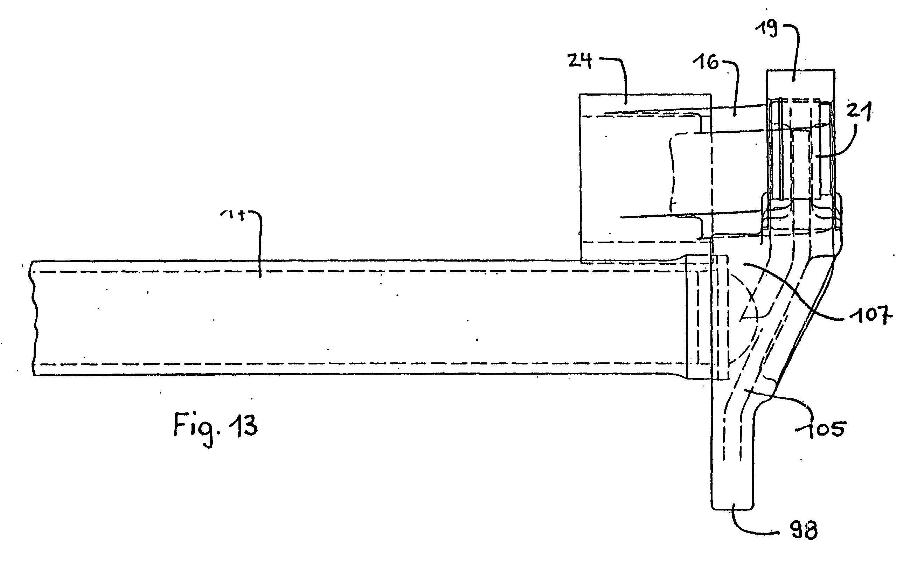

Die Anschlagfüße 97, 98 sind vorzugsweise jeweils einstückig mit den Längsarmen 15, 16 der U-förmigen Stabilisatorschwinge 8 ausgebildet und rückseitig - wie aus Fig. 12 ersichtlich - durch eine Strebe 105 zum jeweiligen Längsarm 15 bzw. 16 hin versteift. Der jeweilige Anschlagfuß 97 bzw. 98 geht dabei unten an einem längsarm-vorderendigen Aufnahmeauge 106, 107 ab, in dessen innenseitige Sackbohrung das zugehörige Ende der Querstange 17 form- und gegebenenfalls auch kraftschlüssig eingesetzt und anschließend angeschweißt ist.

Die vorbeschriebene erfindungsgemäße Bauweise der vorderen Fahrerhaus-Lagerung hat eine Reihe von Vorteilen, auf die nachfolgend eingegangen ist.

Sie ist komfortabel, kostengünstig; montagefreundlich, verspannungsfrei und crashoptimiert.

Der Komfort wird durch große Federwege erreicht. Da das hintere Lager der Stabilisatorschwinge rahmenseitig in einem "ruhigen" Bereich des Fahrgestellrahmens angeordnet ist, ergibt sich auch eine Querschüttelverbesserung. Die Trennung der Komfortlager vom Drehlager für Kippen gewährleistet eine optimale Auslegung.

Die Kostensenkung wird dadurch erzielt, daß gegenüber bisherigen Fahrerhaus-Lagerungen verschiedene Teile entfallen.

Die Verbesserung der Montagefreundlichkeit ergibt sich dadurch, daß eine sehr gute Zugangsmöglichkeit zur Verbindungsstelle Fahrerhaus-Fahrgestellrahmen beim Fahrerhausaufsetzen gegeben ist.

Die Verspannungsfreiheit wird dadurch erzielt, daß Ausgleichsmöglichkeiten zwischen Stabilisatorschwinge und Fahrgestellrahmen einerseits sowie Fahrerhaus andererseits gegeben sind.

Die Crashoptimierung erfolgt durch energieverzehrende Ausgestaltung und/oder Anordnung verschiedener Lagerteile. Hierzu nachfolgend einige Anmerkungen.

Die hinteren Lagerböcke 9, 10 erfahren im Crashfall ab einem bestimmten Beanspruchungsniveau an den vorgesehenen Stellen örtlich starke Verformungen, wodurch eine Verlagerung der hinteren Stabilisatorschwingen-Lagerstellen nach hinten und unten erfolgt. Je nach Größe der von vorne auf das Fahrerhaus einwirkenden Kraft kann dann sogar ein Überschlagen der Stabilisatorschwinge 8 nach hinten erfolgen. Aufgrund dieses durch gezielte Bauteilauslegung bewirkten Effekts läßt sich im Crasfall eine größtmögliche Verschiebung des Fahrerhauses nach hinten gegenüber dem Fahrgestell erzielen als Kombination aus der Bogenbewegung der Stabilisatorschwingenlagerpunkte um eine tiefliegende Drehachse und der doppelten Stabilisatorschwingenarmlänge aus der Stabilisatorschwingen-Überschlagbewegung. Dabei bleibt während dieses gesamten Bewegungsablaufes eine feste Verbindung zwischen Fahrerhaus und Fahrgestell erhalten.

Bei der Version gemäß Fig. 2 bis 7, 22, 23 bauen die hinteren Lagerböcke 9, 10 relativ hoch, wobei deren Höhe z. B. das Doppelte der Länge im Bereich der unteren Anschlußzone 28 beträgt. Dieses begünstigt wegen der im Bereich des oberen Endes jedes Lagerbockes 9, 10 liegenden Anschlußstelle 40 der Stabilisatorschwinge 8 die Verformung der Lagerböcke 9, 10 in den konstruktiv vorgegebenen Bereichen.

Bei der Version gemäß Fig. 8 bis 10, 24, 25 bauen die hinteren Lagerböcke 9, 10 nicht so hoch, ihre Höhe entspricht hier z. B. der Lagerbock-Länge im Anschlußbereich 28. Dies hat zur Folge, daß hier im Crashfall ein kürzerer Hebelarm wirksam ist. Die Verformung ist daher bei diesen niedrigeren Lagerböcken 9, 10 nicht so stark wie bei jenen der anderen Version. Dafür ist hier ein Abriß der Lagerböcke 9, 10 im Bereich der vorderen Verschraubungen 29 vorgesehen, wobei dieser Abriß durch den Anschlag 48 und den hierdurch gegebenen Hebelarm zwischen dessen Anschlagstelle am Multifunktionslagerschild 3, 4 und der vorderen Verschraubung 29 unterstützt wird. Es erfolgt dann nach ihrem Abriß im Bereich der vorderen Schraubverbindung 29 ein rotatorischer Überschlag der Lagerböcke 9, 10 um die hinteren Schraubverbindungen 30 nach hinten sowie. - je nach Stärke der Krafteinwirkung von vorne - auch hier ein Überschlag der Stabilisatorschwinge 8 mit einem entsprechenden Axialversatz des Fahrerhauses nach hinten. Auch hierbei bleibt während des gesamten besagten Bewegungsablaufes die Verbindung zwischen Fahrerhaus und Fahrgestell erhalten.

Da diese Funktion und Verhaltensweisen durch Crashversuche mit gebauten Lastkraftwagen-Prototypen bewiesen wurden, ergibt sich ein bisher noch nicht in der Praxis dargestellter Sicherheitsstandard im Bereich Fahrerhaus und Insassensicherheit.

## Patentansprüche

1. Vordere Lagerung des kippbaren Fahrerhauses eines Lastkraftwagens, bei der das Fahrerhaus (5) vorne auf zwei Anschlusskonsolen (13, 14) befestigt und über eine aus zwei Längsarmen (15, 16) und einer Querstange (17) gebildete U-förmige Stabilisatorschwinge (8) am Fahrgestell-Rahmen (1, 2), dort an Lagerböcken (9, 10) angelenkt sowie gegenüber dem Fahrgestell-Rahmen (1, 2) durch zwei unten an jeweils einem Feder-Dämpfer-Bein-Halter (11, 12) angelenkte Feder-Dämpfer-Beine (6, 7) abgefedert ist, **dadurch gekennzeichnet, dass** die U-förmige Stabilisatorschwinge (8)
- durch ein einstückiges oder aus mehreren miteinander verschweißten Teilen zusammengesetztes Bauteil gebildet ist,
- vorne jeweils am Übergangsbereich zwischen Querstange (17) und einem Längsarm (15, 16) ein nach oben abragendes Lagerauge (18, 19) mit eingebautem Lager (20, 21) für einen quergeführten und kippbaren Anschluss an jeweils einer das Fahrerhaus (5) tragenden Anschlusskonsole (13, 14) aufweist, und
- zwei Anschlagfüße (97, 98) aufweist, von denen jeder unten abragend am vorderen Ende jeweils eines Längsarmes (15, 16) angeordnet ist und ein Teil einer das Einfedern des Fahrerhauses (5) beim Kippen begrenzenden Einrichtung bildet, die des weiteren zwei zugehörige, fahrgestell-rahmenfest angeordnete Anschläge (99, 100) umfasst.

2. Vordere Fahrerhaus-Lagerung nach Anspruch 1, **dadurch gekennzeichnet, daß** als tragende Organe zwei Multifunktionslagerschilde (3, 4) vorgesehen sind, von denen jeder am vorderen Ende eines Rahmen-Längsträgers (1, 2) des Fahrgestells befestigt ist, und daß an jedem Multifunktionslagerschild (3, 4) vorn seitlich außen ein Feder-Dämpfer-Bein-Halter (11,12) und hinten oben ein die Stabilisatorschwinge (8) lagernder Lagerbock (9, 10) lösbar befestigt sind.

3. Vordere Fahrerhaus-Lagerung nach Anspruch 1, **dadurch gekennzeichnet, daß** das Fahrerhaus (5) über die Anschlußkonsolen (13, 14) quergeführt und kippbar am vorderen Ende der Stabilisatorschwinge (8) angelenkt ist, über die in deren Lageraugen (18, 19) eingebauten Lager (20, 21) und über in einer Horizontallinie (22) zueinander fluchtend in den Anschlußkonsolen (13, 14) gefaßte Lagerachsen (94, 95).

4. Vordere Fahrerhaus-Lagerung nach Anspruch 1, **dadurch gekennzeichnet, daß** die Stabilisatorschwinge (8) entweder durch ein einstückiges Gesenkschmiedeoder Stahlgußteil realisiert oder aus drei vorgefertigten Einzelteilen zusammengesetzt ist, wobei in letzterem Fall die beiden Längsarme (15, 16) einschließlich. aller Lageraugen und sonstigen Teile komplett jeweils durch ein Gesenkschmiede- oder Stahlgußteil und die Querstange (17) entweder durch ein Rohr oder ebenfalls ein vollmaterialiges Gesenkschmiedeteil gebildet ist und diese drei Teile miteinander verschweißt sind.

5. Vordere Fahrerhaus-Lagerung nach einem der Ansprüche 1 und 4, **dadurch gekennzeichnet, daß** die Längsarme (15, 16) der U-förmigen Stabilisatorschwinge (8) so geformt sind, daß sie bei einem Frontalcrashvorgang in Längsrichtung gezielt deformierbar sind, insofern eine energieabsorbierende Wirkung haben.

6. Vordere Fahrerhaus-Lagerung nach Anspruch 5, **dadurch gekennzeichnet, daß** die Längsarme (15, 16) der U-förmigen Stabilisatorschwinge (8) zwischen vorderem und hinterem Ende - von der Seite betrachtet - leicht nach oben durchgebogen und - von oben betrachtet - ungerade z. B. S- oder Z-förmig ausgebildet sind und insofern bei einem Frontalcrashvorgang definiert verformbare Falt-, Biegeoder Knickzonen aufweisen.

7. Vordere Fahrerhaus-Lagerung nach einem der Ansprüche 4 bis 6, **dadurch gekennzeichnet, daß** die beiden Längsarme (15, 16) innerhalb der U-förmigen Stabilisatorschwinge (8) gepfeilt zueinander in dem Sinne geordnet sind, daß deren hintere Enden weniger weit voneinander beabstandet sind als deren vordere Enden.

8. Vordere Fahrerhaus-Lagerung nach Anspruch 1, **dadurch gekennzeichnet, daß** die Anschläge (99, 100) der Einfederungsbegrenzungseinrichtung grundsätzlich so weit von der Unterkante der Anschlagfüße (97, 98) enfernt sind, daß das Einfedern des ungekippten Fahrerhauses während der Fahrt im vorgegebenen Maßbereich nicht behindert ist.

9. Vordere Fahrerhaus-Lagerung nach Anspruch 1, **dadurch gekennzeichnet, daß** jeder ein Teil der Einfederungsbegrenzungseinrichtung bildende Anschlag (99, 100) durch eine austauschbare Anschlagplatte gebildet ist, die an einem rahmenfest, vorzugsweise einem Multifunktionslagerschild (3, 4) angeordneten Feder-Dämpfer-Bein-Halter (11, 12) und dort an einem hochgezogenen, durch einen Quersteg gebildeten oberen Ende gegebenenfalls elastisch nachgiebig oder abgefedert befestigt ist.

10. Vordere Fahrerhaus-Lagerung nach Anspruch 1, **dadurch gekennzeichnet, daß** jeder ein Teil der Einfederungsbegrenzungseinrichtung bildende Anschlag (99, 100) durch eine austauschbare Anschlagplatte gebildet ist, die an einem Quersteg eines Halters (103, 104) gegebenenfalls elastisch nachgiebig oder abgefedert befestigt ist, der selbst rahmenfest, vorzugsweise an einem Multifunktionslagerschild (3, 4) befestigt ist.

11. Vordere Fahrerhaus-Lagerung nach Anspruch 1, **dadurch gekennzeichnet, daß** jeder der beiden Anschlagfüße (97, 98) unten an einem am vorderen Ende eines Längsarmes (15, 16) gegebenen Aufnahmeauges (106, 107) abragt, in dessen innenseitige Sackbohrung das zugehörige Ende der Querstange (17) der Stabilisatorschwinge (8) eingesetzt und befestigt ist.

12. Vordere Fahrerhaus-Lagerung nach Anspruch 1, **dadurch gekennzeichnet, daß** jeder der beiden Anschlagfüße (97, 98) jeweils rückseitig durch eine Strebe (105) zum jeweiligen Längsarm (15, 16) hin versteift und einstückig mit den Längsarmen (15, 16) der U-förmigen Stabilisatorstange (8) ausgebildet sind.

## Claims

1. Front mounts of a tiltable cab of a truck, in which mounts the front end of the cab (5) is fastened to two connection consoles (13, 14) and is located on bearing blocks (9, 10) on the chassis frame (1, 2) via a U-shaped swinging-arm stabiliser (8) composed of two longitudinal arms (15,16) and a transverse arm (17) and is supported relative to the chassis frame (1, 2) by means of two spring-damper struts (6, 7), each lower end of which spring-damper struts (6, 7) is located on a spring-strut holder (11, 12), **characterised in that** the U-shaped swinging-arm stabiliser (8)
• is designed either as a single-piece part or as a component composed of several parts welded together,
• is provided at the front with a bearing eye (18, 19) arranged in the transition area between the transverse bar (17) and a longitudinal arm (15, 16) and projecting upwards, which bearing eye (18, 19) has an installed bearing (20; 21) for a transverse-guided, tiltable connection at each connection console (13, 14) carrying the cab (5), and
• has two stop feet (97, 98), each of which projects downwards from the front end of each longitudinal arm (15, 16) and forms a part of a device limiting the spring compression of the cab (5) during tilting actions, which device also comprises two associated stops (99, 100) firmly attached to the chassis frame.

2. Front cab mounts according to Claim 1, **characterised in that** two multi-function bearing shields (3, 4) are provided as carrying organs, each of which is fastened to the front end of a frame longitudinal member (1, 2) of the chassis and that a spring damper strut holder (11, 12) is detachably fastened to the front outside of each multi-function bearing shield (3, 4) and a bearing block (9, 10) supporting the swinging-arm stabiliser (8) is detachably fastened to the rear upper side of each multi-function bearing shield (3, 4).

3. Front cab mounts according to Claim 1, **characterised in that** the cab (5) is guided in transverse direction via the connection consoles (13, 14) and is tiltably located at the front end of the swinging-arm stabiliser (8) via the bearings (20, 21) installed in the bearing eyes (18, 19) of said swinging-arm stabiliser (8) and via bearing shafts (94, 95) provided in the connection consoles (13, 14) and aligned with each other in a horizontal line (22).

4. Front cab mounts according to Claim 1, **characterised in that** the swinging-arm stabiliser (8) either is provided in the form of a single-piece drop-forged or cast-steel part or is composed of three prefabricated individual parts, whereby in the latter case the two longitudinal arms (15, 16) including all bearing eyes and other parts are completely provided in the form of a drop-forged or cast-steel part and the transverse bar (17) is designed either as a tube or likewise as a full-material drop-forged part and that these three parts are welded to one another.

5. Front cab mounts according to one of the Claims 1 and 4, **characterised in that** the longitudinal arms (15, 16) of the U-shaped swinging-arm stabiliser (8) are shaped such that they can be purposefully deformed in longitudinal direction in a head-on collision and insofar have an energy-absorbing effect.

6. Front cab mounts according to Claim 5, **characterised in that** the longitudinal arms (15, 16) of the U-shaped swinging-arm stabiliser (8) between the front and rear ends - if viewed from the side - are curved slightly upwards and - if viewed from above - are non-straight, eg S or Z-shaped and insofar have folding, bending and buckling zones which can be deformed in a defined manner in a head-on collision.

7. Front cab mounts according to the Claims 4 to 6, **characterised in that** within the U-shaped swinging-arm stabiliser (8) the two longitudinal arms (15, 16) are arranged in an arrow-shaped manner in the sense that the distance between the rear ends of said longitudinal arms (15, 16) is smaller than that between the front ends of said longitudinal arms (15, 16).

8. Front cab mounts according to Claim 1, **characterised in that** the stops (99, 100) of the device limiting the spring compression are always so far away from the lower edge of the stop feet (97, 98) that spring compression of the non-tilted cab is not restricted in the specified range while the vehicle is in motion.

9. Front cab mounts according to the Claim 1, **characterised in that** each of the stops (99, 100) forming a part of the device limiting the spring compression is designed as an exchangeable stop plate which is attached, if necessary, in an elastic-resilient or sprung manner to an upswept upper end of a spring-damper-strut holder (11, 12) firmly fitted to the frame, preferably to a multi-function bearing plate (3, 4), said upswept upper end being formed by a transverse web.

10. Front cab mounts according to Claim 1, **characterised in that** each of the stops (99, 100) forming a part of the device limiting the spring compression is designed as an exchangeable stop plate which is attached, if necessary, in an elastic-resilient or sprung manner to a transverse web of a bracket (103, 104) which itself is firmly fastened to the frame, preferably to a multi-function bearing shield (3, 4).

11. Front cab mounts according to Claim 1, **characterised in that** the lower end of each of the two stop feet (97, 98) projects from a support eye (106, 107) provided at the front end of a longitudinal arm (15, 16)and that in the blind-hole bore provided on the inside of said support eye (106, 107) the associated end of the transverse bar (17) of the swinging-arm stabiliser (8) is inserted and fastened.

12. Front cab mounts according to Claim 1, **characterised in that** the rear side of each of the two stop feet (97, 98) is reinforced by a strut (105) towards the respective longitudinal arm (15, 16) and is designed as a single piece with the longitudinal arms (15, 16) of the U-shaped stabiliser bar (8).

## Revendications

1. Suspension avant de la cabine basculante d'un camion poids lourd sur lequel la cabine (5) est fixée à l'avant sur deux consoles d'assemblage (13, 14) et est articulée indirectement sur le cadre du châssis (1, 2) au niveau de supports de palier par un bras oscillant stabilisateur en U formé de deux bras longitudinaux (15, 16) et d'une traverse (17) et, vis-à-vis de ce dernier, est amortie par l'intermédiaire de deux amortisseurs à jambe de suspension (6, 7) articulés par le bas sur un support d'amortisseur à jambe de suspension (11, 12) de chaque côté, **caractérisée par le fait que** le bras oscillant stabilisateur en forme de U (8)
- est formé d'un élément monobloc ou de plusieurs pièces soudées entre elles,
- présente à l'avant de chaque côté au niveau de la zone de transition entre la traverse (17) et un bras longitudinal (15, 16) un orifice de palier (18, 19) dépassant vers le haut avec un palier (20, 21) intégré pour assurer un raccordement guidé transversalement et pivotable au niveau de chacune des consoles d'assemblage (13, 14) et
- présente deux pieds de butée (97, 98) parmi lesquels chacun est disposé en bas en dépassant sur l'extrémité avant de chaque bras longitudinal (15, 16) et forme une partie d'un dispositif limitant le débattement de la cabine (5) lors du basculement de celle-ci.

2. Suspension avant de cabine selon la revendication 1, **caractérisée par le fait qu'**en tant qu'organe porteur deux flasques multifonctions (3, 4) sont prévus et chacun est fixé sur l'extrémité avant d'un longeron de cadre (1, 2) du châssis, et **par le fait qu'**à chaque flasque multifonctions (3, 4) est fixé de manière desserrable à l'avant, de manière latérale et à l'extérieur, un support d'amortisseur à jambe de suspension (11, 12) et, à l'arrière sur la partie supérieure, un support de palier (9, 10) servant d'appui au bras oscillant stabilisateur (8).

3. Suspension avant de cabine selon la revendication 1, **caractérisée par le fait que** la cabine (5) est guidée transversalement par l'intermédiaire des consoles d'assemblage (13, 14) et articulée de manière à pouvoir basculer au niveau de l'extrémité avant du bras oscillant stabilisateur (8) par l'intermédiaire des paliers (20, 21) montés dans leurs orifices de palier (18, 19) et par l'intermédiaire d'axes de palier (94, 95) montés dans les consoles d'assemblage (13, 14) en se fuyant horizontalement l'un par rapport à l'autre.

4. Suspension avant de cabine selon la revendication 1, **caractérisée par le fait que** le bras oscillant stabilisateur (8) est soit formé d'une pièce monobloc estampée ou en fonte d'acier ou bien composé de trois pièces individuelles préfabriquées, auquel cas, dans le dernier cas, les deux bras longitudinaux (15, 16), y compris tous les orifices de palier et les autres pièces, sont formés chacun entièrement d'une pièce estampée ou en fonte d'acier et d'une traverse (17) formée soit d'un tube, soit également d'une pièce estampée dans la masse et ces trois pièces sont soudées entre elles.

5. Suspension avant de cabine selon une des revendications 1 et 4, **caractérisée par le fait que** les bras longitudinaux (15, 16) du bras oscillant stabilisateur en forme de U (8) sont formés de telle façon qu'ils soient déformables de manière contrôlée dans le sens longitudinal lors d'une collision frontale et, de ce fait, soient prévus pour absorber l'énergie.

6. Suspension avant de cabine selon la revendication 5, **caractérisée par le fait que** les bras longitudinaux (15, 16) du bras oscillant stabilisateur en forme de U (8) - vue de côté - sont légèrement coudés vers le haut entre l'extrémité avant et arrière et - vue de dessus - ont une forme atypique, par exemple en forme de S ou de Z, et présentent de ce fait des zones de pliage, de cintrage ou de coudage déformables de manière contrôlée lors d'une collision frontale.

7. Suspension avant de cabine selon une des revendications 4 à 6, **caractérisée par le fait que** les deux bras longitudinaux (15, 16) sont placés en forme de flèche l'un par rapport à l'autre dans le bras oscillant stabilisateur (8) dans le sens où leurs extrémités arrière sont placés moins loin l'une de l'autre que leurs extrémités avant.

8. Suspension avant de cabine selon la revendication 1, **caractérisée par le fait que** les butées (99, 100) du dispositif de limitation du débattement se trouvent systématiquement à une distance suffisante du bord inférieur des pieds de butée (97, 98) pour ne pas entraver le débattement de la cabine non basculée dans les limites spécifiées durant la marche.

9. Suspension avant de cabine selon la revendication 1, **caractérisée par le fait que** chaque butée (99, 100) formant une partie du dispositif de limitation du débattement est constituée d'une plaque de butée interchangeable, fixée le cas échéant par flexion élastique ou par suspension à un support d'amortisseur à jambe de suspension (11, 12) disposé, de préférence, sur un flasque multifonctions (3, 4) de manière fixe sur le cadre et, à cet endroit, à une extrémité supérieure relevée, formée d'un montant transversal.

10. Suspension avant de cabine selon la revendication 1, **caractérisée par le fait que** chaque butée (99, 100) formant une partie du dispositif de limitation du débattement est constituée d'une plaque de butée interchangeable, fixée le cas échéant par flexion élastique ou par suspension à un montant transversal d'un support (103, 104), fixé lui-même au cadre, de préférence, sur un flasque multifonctions (3, 4).

11. Suspension avant de cabine selon la revendication 1, **caractérisée par le fait que** chacun des deux pieds de butée (97, 98) est en saillie en bas au niveau d'un orifice récepteur (106, 107) placé à l'extrémité avant d'un bras longitudinal (15, 16), dans le trou borgne intérieur duquel est insérée et fixée l'extrémité associée de la traverse (17) du bras oscillant stabilisateur (8).

12. Suspension avant de cabine selon la revendication 1, **caractérisée par le fait que** chacun des deux pieds de butée (97, 98) est renforcé à l'arrière par une jambe de force (105) en direction de chaque bras longitudinal (15, 16) et représente une seule pièce avec les bras longitudinaux (15, 16) du stabilisateur en forme de U (8).
